# EUROPEAN PATENT APPLICATION

(11) **EP 3 330 075 A1**
(43) Date of publication of application: **06.06.2018**
(21) Application number: 17202188.3
(22) Date of filing: 16.11.2017
(51) Int. Cl.: B32B 7/12, C09J 7/20, C09J 7/29

(54) **RE-CLOSABLE FILM STRUCTURE FOR SEALING CONTAINERS AND PRODUCTION METHOD THEREOF**

(30) Priority: 02.12.2016 IT 201600122718
(71) Applicant: Alucart S.r.l., 20155 Milano (IT)
(72) Inventor: TAVEGGIA, Paolo Marco Maria, 20155 Milano (IT); CASUSCELLI, Francesco, 20155 Milano (IT)
(74) Representative: Rastelli, Franco

(57) **Abstract**

A film structure for sealing re-closable containers comprising a base layer, a sticky or adhesive layer, a sealing coating and one or more functional layers arranged between said sticky or adhesive layer and said sealing coating. The structure according to the present invention is characterised in that the sealing coating is peeled off from a release support and transferred by adhesion to the surface of said base layer having said sticky layer.

## Description

### BACKGROUND OF INVENTION

The present invention relates to a re-closable film structure for sealing containers and a production method thereof.

In particular, the present invention relates to a plastic film mainly used for heat-sealing trays, in particular trays containing food products.

The main characteristics of this film is that it can be opened and re-closed numerous times after the first opening, allowing the user to remove part of the contents and then re-close the wrapping in order to preserve the freshness of the product that remains inside the tray or container.

At present, two production techniques are known for achieving this type of product.

A first known technique provides for the coextrusion of various layers of polymeric material, among which the penultimate layer consists of a pressure sensitive or hot-melt adhesive, and the last layer consists of a thin coextrusion of a heat-sealing film.

This last layer tears off along the heat-sealing area, corresponding to the edge of the tray, at the moment in which the covering film is pulled so as to open the tray or container, thus leaving this layer integral to the tray, and therefore leaving the adhesive layer exposed, which allows the re-closing and subsequent re-opening.

The second known technique generally provides for the lamination through a spreading/coupling machine between a PET layer and a tearable polyethylene layer of a pressure sensitive or hot-melt adhesive.

The re-opening does not always work properly as the polyethylene does not tear well and therefore, it is necessary to use both an increased adhesive grammage and an increased PET film thickness, which results in increased wrapping thickness and costs.

### SUMMARY OF THE INVENTION

The aim of the present invention is to provide a re-closable film structure for sealing containers and a production method thereof, which overcome the drawbacks of the prior art described above.

Within this aim, one object of the invention is to provide a film structure and a production method thereof which are advantageous both for the user and for the manufacturer.

One particular object of the invention is to provide a film structure which is considerably thinner and weighs much less than prior art films and is also easy to re-close.

A further object of the present invention is to provide a structure that is easy to recycle.

Another object of the invention is to provide a method for the production of a film structure which ensures a higher production yield.

A further object of the present invention is to provide a film structure that can be produced with only one support raw material and in a single production line.

This and other objects of the invention which will be described in greater detail hereinafter, are achieved by a re-closable film structure for sealing containers characterised in that it comprises a base layer, a sticky or adhesive layer, and a heat-sealing coating.

This and other objects of the invention, which will be described in greater detail hereinafter, are furthermore achieved by a manufacturing method of a re-closable film structure for sealing containers characterised in that it comprises the steps of:
- unwinding a film from a reel which forms a base layer (2);
- applying an adhesive layer (3) to said base layer (2);
- providing a release support (6);
- spreading a heat-sealing coating (5) onto said release support (6);
- peeling said sealing coating (5) from said release support (6) and transferring said sealing coating (5) by adhesion to the surface of said base layer (2) having said sticky or adhesive layer (3).

### BRIEF DESCRIPTION OF THE DRAWINGS

Further characteristics and advantages of the object of the present invention will become clearer through an examination of the description of a preferred but non-limiting embodiment of the invention, which is shown purely for illustrative and not-limiting purposes in the attached drawings, wherein:

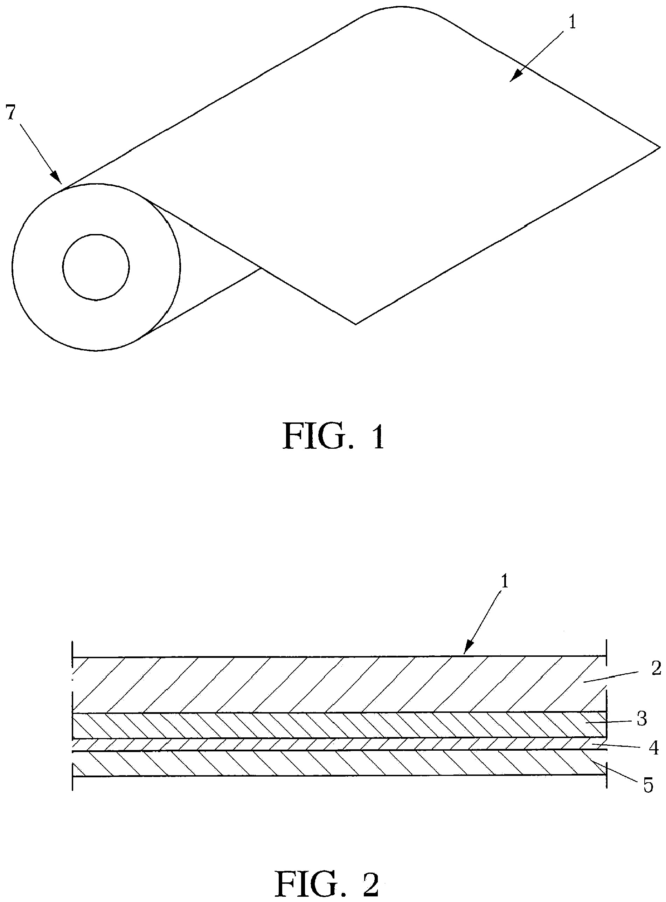

Figure 1 is a perspective view of a reel of the film structure according to the present invention;
Figure 2 is a sectional view of the film structure, schematically showing the stratigraphy of the product;

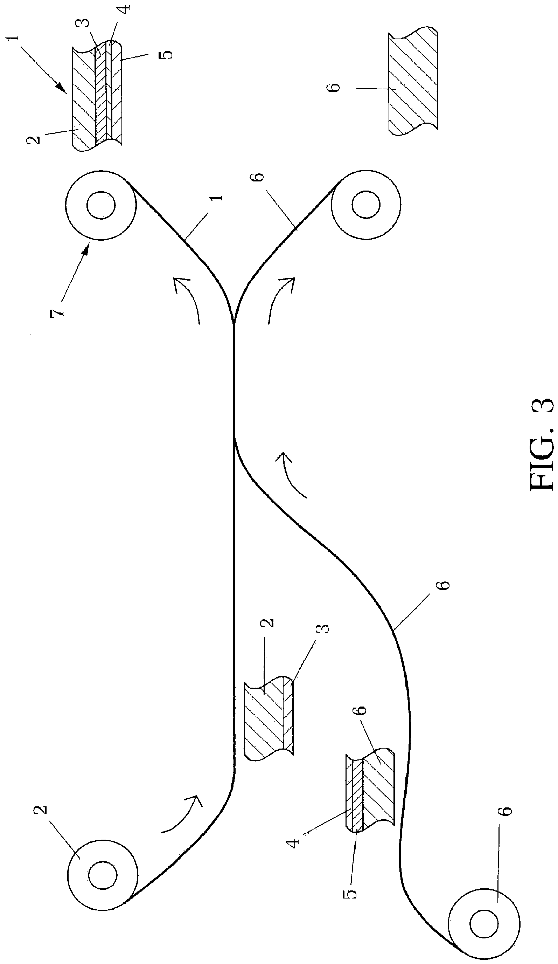

Figure 3 schematically shows the manufacturing process and the stratigraphies of the semi-finished products;
Figure 4 schematically shows a manufacturing process according to a further aspect of the present invention.

### DESCRIPTION OF PREFERRED EMBODIMENTS

With particular reference to the numerical symbols of the above-mentioned figures, the film structure for sealing re-closable containers, according to the present invention, indicated as a whole with the reference numeral 1, comprises a base layer 2, for example made of PET, a sticky or adhesive layer 3, a protective layer 4 and a sealing coating 5.

The base layer 2 can consist of a film made of any other suitable material besides PET.

The structure 1 according to the present invention is characterised in that the sealing coating 5 is peeled off from a release support 6 and is transferred, through adhesion, onto the surface of the base layer 2, having the sticky layer 3.

The sticky side 3 of the base layer 2 consists of a pressure sensitive adhesive which is spread by a spreading machine or by a hot-melt spreading head with a blade or roller.

Before being wound in a reel 7, said film is pressure coupled to the release support 6 which is spread with the heat-sealing coating 5.

The heat sealing layer 5 was previously spread on the film 6 having a releasing surface, said film after the step of coupling to the film 2 having the adhesive surface 3, is peeled off from the sealing layer 5 and recovered for subsequent operations.

During the preparation step of the first component, namely the releasing film 6 with coating, further functional layers 4 can be overlapped onto the layer of heat-sealing coating 5, said functional layers being used to create a barrier between the sealing coating 5 and the pressure sensitive (or hot-melt) adhesive 3, or to perform other functions, for example a UV absorbing filter layer.

The sealing layer 5 will still remain the layer that will come into contact with the tray or other material with which it will be heat-sealed.

It is also the last layer no longer sticky, having the characteristic of being able to be heat-sealed onto a tray a other material, and enabling during the opening step of the tray, a peeling only in the sealing area, thus exposing the adhesive layer 3 which allows the opening and closing operations.

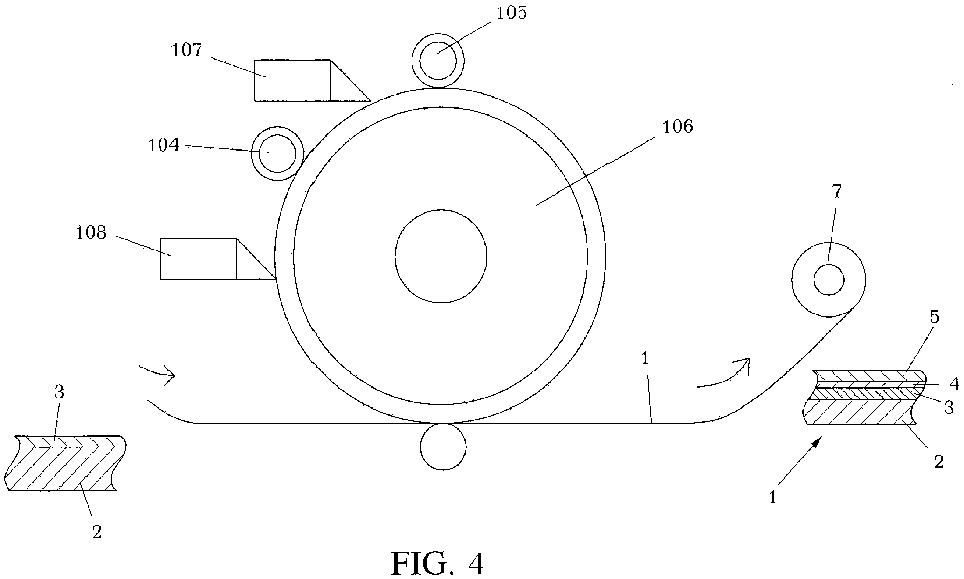

Figure 4 schematically shows a manufacturing process of the structure, according to a further aspect of the present invention.

According to this further aspect of the invention, the releasing film 6 is replaced by a releasing drum 106 on which a heat-sealing coating 5 and any intermediate layers 4 are spread, by respective applicators 105 and 104.

The coatings are spread by a direct or indirect flexographic or rotogravure system or by a hot-melt spreading head directly on the drum 106, and are dried in the case of solvent or water-based coatings with hot air boxes 107 and 108, which blow onto the surface of the drum or, in the case of hot-melt, the drum would be conditioned and cooled.

It is further possible to use a modified flexographic printer wherein, instead of printing the film, printing is carried out directly on the central drum 106 that has been treated, so as to render it releasable.

This solution avoids the use of the releasing film 6, and makes the machine more compact, also eliminating the cost of the film itself.

The advantages of the film structure of the present invention and the production method thereof are significant both for the user and for the manufacturer.

From the point of view of the user, the structure is considerably thinner, much lighter in weight and much brighter than films of the prior art.

A further advantage consists of the fact that the structure is made of a single material that can be recycled in the PET cycle, or another polymer.

From the point of view of the manufacturer, the film structure can be produced with a higher production yield, namely, more metres of product can be manufactured per reel produced.

The structure can be produced with a single support raw material.

Furthermore, the structure can be produced advantageously using a single production line, but can also be produced in multiple steps.

It is furthermore possible to re-use for multiple times the intermediate product, namely the releasing film 6.

For the final user there is an easy identification of the type of waste, a greater recycling simplicity and an obvious easier re-closing.

In practice it has been found that the present invention achieves its intended aim and objects.

In fact, a film structure especially designed for heat-sealing trays or containers for food products or other products has been provided, allowing for the re-opening and re-closing numerous times after the first opening, thus allowing the user to remove part of the content and then re-close the wrapping, so as to preserve the freshness of the product left inside the tray or container.

Of course the materials used, as well as their sizes, may vary according to requirements.

## Claims

1. A re-closable film structure for sealing containers comprising a base layer (2), a sticky or adhesive layer (3), a sealing coating (5) and one or more functional layers (4); said structure being **characterised in that** said functional layers (4) are arranged between said sticky layer (3) and said sealing coating (5) and serve to create a barrier between said sealing coating (5) and said sticky layer (3).

2. A structure, according to claim 1, **characterised in that** said functional layers (4) serve to perform protective functions, such as a UV absorbing filter layer.

3. A production method of a re-closable film structure for sealing containers comprising the steps of:
- unwinding from a reel a film that forms a base layer (2);
- applying an adhesive layer (3) to said base layer (2);
- providing a release support (6);
- spreading a heat sealing coating (5) on said release support (6);
said method being **characterised in that** it further comprises the step of:
- peeling off said sealing coating (5) from said release support (6) and transferring said sealing coating (5) by adhesion to the surface of said base layer (2) having said sticky layer (3).

4. A method, according to claim 3, **characterised in that** said release support (6) is provided by unwinding a second film from a second reel; said heat-sealing layer (5) is spread on said release support (6) having a release surface; after the step of coupling with said base layer (2) having said adhesive surface (3), said release support (6) is peeled off from said sealing layer (5) and recovered for subsequent operations.

5. A method, according to claim 3, **characterised in that** said release support is made by a release drum (106) on which said heat sealing coating (5) and any intermediate layers (4) are spread, by respective applicators (105, 104); said applicators comprising a direct or indirect flexographic or rotogravure system or a system with a hot-melt spreading head directly on said drum (106), adapted to spread said coatings; said coatings being dried, in the case of solvent or water-based coatings, with hot air boxes (107, 108), which blow onto the surface of the drum (106) or, in the case of hot-melt, said drum (106) is conditioned and cooled.

6. A method, according to claim 3, **characterised in that** said sticky layer (3) consists of a pressure sensitive adhesive which is spread by a spreading machine or by a hot-melt spreading head with a blade or roller.

7. A method, according to claim 3, **characterised in that** in the preparation step of said release support (6), further functional layers (4) are overlapped onto said heat sealing coating (5), which functional layers serve to create a barrier between said heat sealing coating (5) and said pressure sensitive adhesive layer (3) or to perform other functions, such as, for example, a UV absorbing filter layer.
